# EUROPÄISCHE PATENTSCHRIFT

(11) **EP 1 450 317 B1**
(45) Veröffentlichungstag und Bekanntmachung des Hinweises auf die Patenterteilung: **19.04.2006**
(21) Anmeldenummer: 03100437.7
(22) Anmeldetag: 21.02.2003
(51) Int. Cl.: G07F 7/10, G07F 19/00, H04Q 7/20

(54) **Verfahren und System zur Sperrung/Entsperrung von einem an eine SIM-Karte gebundenen Geldkonto**
Method and system for blocking or deblocking a financial account associated to a SIM-card
Méthode et système pour le verrouillage et déverrouillage d'un compte associé à une carte-SIM

(43) Veröffentlichungstag der Anmeldung: 25.08.2004
(73) Patentinhaber: Swisscom Mobile AG, 3050 Bern (CH)
(72) Erfinder: Busch Lauper, Karin, 3014, Bern (CH); Cantini, Renato, 1782, Belfaux (CH)
(74) Vertreter: P&TS Patents & Technology Surveys SA

(56) Entgegenhaltungen:
- WO-A-00/31691
- WO-A-98/37524
- US-B1- 6 212 390

## Beschreibung

### Technisches Gebiet

Die vorliegende Erfindung betrifft ein Verfahren und ein Modul zur Sperrung beziehungsweise Entsperrung von mindestens einem an ein Identifizierungsmodul gebundenes Geldkonto.

### Stand der Technik

Gemäss dem bisherigen Stand der Technik werden Zahlungstransaktionen zwischen einem Kunden (Benutzer, zum Beispiel einem Mobilteilnehmer) und einem Anbieter (beispielsweise einem Händler) oft mit einer elektronischen Zahlungskarte ausgeführt. Debit- und Kreditkarten werden zum Beispiel an Kassen in Geschäften, bei Tankstellen usw. verwendet. Die Karte umfasst meistens Speichermittel (zum Beispiel einen Magnetstreifen und/oder einen Chip), in welchen unter anderem die Identifizierung des Kunden gespeichert ist. Um eine Transaktion zu tätigen (zum Beispiel, um in einem Geschäft einen Artikel zu bezahlen) muss der Benutzer seine Karte beim Händler in einen geeigneten Kartenleser einschieben. Das Terminal liest dann die Identifizierung des Geldkontos (zum Beispiel die PAN, Primary Account Number) in der Karte, ermittelt und zeigt den zu bezahlenden Betrag an, prüft gegebenenfalls die Solvenz des Benutzers und fordert vom Benutzer, dass er die Transaktion mit einer Bestätigungstaste auf dem Händler-Terminal bestätigt. Wenn der Kunde solvent ist und seine Bestätigung eingegeben hat, werden die Geldkontoinhaber-Identifizierung, der zu bezahlende Betrag und evtl. auch eine Terminal-Identifizierung an einen durch ein Telekommunikationsnetz mit dem Terminal verbundenen Finanzserver übermittelt. Entsprechend wird das Konto des Benutzers bei diesem Zahlungsdienstanbieterserver sofort oder später belastet.

Anbieter verfügen immer öfter über "virtuelle Terminals" (zum Beispiel Software-Komponenten), die für Zahlungstransaktionen mit einer Geldkarte miteinander kooperieren. In der nachfolgenden Beschreibung wird deshalb von Anbieter-Zahlungsmodul gesprochen, wobei das Modul entweder ein physisches Terminal sein kann oder eine Software-Anwendung.

Man unterscheidet bei kartenbasierten Zahlungssystemen zwischen Wertkarten (oder elektronisches Geld), Kreditkarten und Debitkarten. Bei Wertkarten weist die Zahlungskarte meist einen Speicherbereich auf, in welchen (in der Regel zuvor) ein Geldbetrag geladen wurde (Prepaid). Der Geldbetrag kann aus Sicherheitsgründen oft auch in einem Fernserver gespeichert werden; in diesem Fall kann die Wertkarte nur eine Identifizierung des entsprechenden Kontos in diesem Server umfassen. Bei Kreditkarten ist die Karte an ein Konto des Benutzers bei einem Finanzinstitut gebunden, wobei dieses Konto erst nach der Transaktion belastet wird (pay later). Bei Debitkarten hingegen muss das gebundene Konto beim Finanzinstitut im voraus geladen werden und wird während oder unmittelbar nach der Transaktion belastet (pay now).

Nachteilig in diesen Verfahren ist die Notwendigkeit, die Karte des Benutzers in ein fremdes Gerät einschieben zu müssen. Die Benutzer haben normalerweise ihre Karte nicht zur Hand, sondern zum Beispiel im Portemonnaie; eine sehr schnelle Transaktion ist also nicht möglich.

Diese Karten enthalten eine Geldkontoinhaber-Identifizierung, die indes nur erlaubt, die Benutzer beim Zahlungsdienstanbieter identifizieren zu lassen. Eine Karte kann also normalerweise nur dann für eine finanzielle Transaktion benutzt werden, wenn der Benutzer und der Anbieter beim gleichen Zahlungsdienstanbieter affiliiert sind. Dagegen ist der Gebrauch der Karte nicht für andere Arten von Transaktionen (zum Beispiel für nicht-finanzielle Transaktionen) vorgesehen. Für den Benutzer ist es also unumgänglich, stets eine grosse Anzahl von Karten für jegliche Arten von finanziellen oder nicht-finanziellen Transaktionen zu besitzen, zum Beispiel mehrere Wert-, Debit- oder Kreditkarten, die von verschiedenen Finanzinstituten oder Ladenketten verwaltet werden, oder Abonnementskarten oder Zugangskarten für geschützte Zonen. Diese Karten sind meistens durch verschiedene Pin-Codes geschützt, die sich der Benutzer mühsam einprägen muss. Ausserdem müssen sowohl Benutzer als auch Händler verschiedene Konten verwalten, das heisst für jedes Konto die allgemeinen Geschäftsbedingungen studieren, Prepaid und Wertkonten im voraus nachladen, Kontoauszüge prüfen, usw.

Um diese Probleme zu vermeiden, wurde unter anderem in der Patentanmeldung WO-A1-98/37524 vorgeschlagen, die SIM-Karte (Subscriber Identity Module) zur Identifizierung des Benutzers in einem Mobilfunksystem als elektronische Zahlungskarte zu verwenden. Zur Übertragung der Transaktionsdaten wird eine kontaktlose Verbindung (zum Beispiel eine infrarote Verbindung) zwischen dem Benutzermobilgerät und dem Anbieterterminal aufgebaut. Dadurch erübrigt sich für den Benutzer die Notwendigkeit, eine elektronische Karte aus dem Portemonnaie zu ziehen und in ein fremdes Gerät einzuschieben. Wird ein nicht autorisierter Nachladeprozess durchgeführt, kann der Kunde in einer Blackliste eingetragen werden.

Es sind beim bisherigen Stand der Technik auch Zahlungsverfahren bekannt, bei welchen Transaktionsdaten zwischen dem Benutzer-mobilgerät und einem Händlerterminal nicht direkt, sondern über eine Zahlungsplattform im Mobilfunknetz übertragen werden. Dabei werden Belege oder eine Referenz zur Transaktion oft über SMS (Short-Message Service) oder USSD (Unstructured Supplementary Service Data) übertragen. Diese Lösungen haben den Vorteil, dass keine umständliche und sicherheitskritische direkte Verbindung zwischen Mobilgerät und Terminal aufgebaut werden muss. Ausserdem erlauben Sie auch Transaktionen zwischen Benutzer und Anbieter, die sich nicht in unmittelbarer Nähe voneinander befinden.

Es sind beim bisherigen Stand der Technik auch Zahlungsverfahren bekannt, bei welchen eine einzige Zahlungskarte mit mehreren Geldkonten verbunden ist. Dadurch erübrigt sich für den Benutzer die Notwendigkeit, mehrere Zahlungskarten bei sich zu haben.

Wird eine solche an mehrere Konten gebundene Karte mit einem (oft ebenfalls an mehrere Konten gebundenen) Terminal verwendet, muss der Benutzer bestimmen, welches Geldkonto für die Transaktion verwendet werden muss. Ist beispielsweise eine Karte an ein Prepaid-Wertkonto und an mehrere Kredit- und/oder Debit-Kartenkonten gebunden, kann der Benutzer meist in einem Menu im Händlerterminal entscheiden, welches Geldkonto belastet werden soll. Dabei kann er verschiedene Parameter berücksichtigen, beispielsweise die Bonität jedes Kontos, die Transaktionskosten, die Sicherheit, den Komfort usw.

Geldkarten und insbesondere Identifizierungsmodule, können verloren gehen, gestohlen, kopiert oder missbraucht werden. Deshalb ist der kommerzielle Erfolg von Geldkarten stark von der angebotenen Sicherheit abhängig. Verschiedene Verfahren werden eingesetzt, um das Risiko des Karteninhabers, des Händlers und/oder des Zahlungsdienstanbieters zu begrenzen. Bei Kredit- und Debitkonten sind die Ausgaben meistens während einer Periode (oft ein Monat) und/oder für jede Transaktion begrenzt. Bei Wertkonten ist der maximale Betrag, der abgelegt werden kann, auch oft eingeschränkt. Komplizierte automatische Betrugs-Ermittlungsverfahren werden von den Zahlungsdienstanbietern eingesetzt, um Betrüge und Betrugsversuche zu ermitteln. Geldkarteninhaber und Produktanbieter haben die Möglichkeit, verdächtige oder gestohlene Karten sperren oder entsperren zu lassen. Andere Mechanismen werden vorgesehen, um die Einsatzmöglichkeiten von Karten derart einzuschränken, dass der Inhaber so wenig wie möglich unter der Einschränkung leidet, aber dass es einem potentiellen Dieb oder Betrüger wesentlich erschwert wird, aus der Karte Profit zu schlagen. Beispielsweise ist bereits bekannt, dass gewisse Geldkarten nur in einem bestimmten Land angenommen werden, weil keine Händler oder Anbieter diese Karten im Ausland als Zahlungsmittel akzeptieren. Geldkarteninhaber haben aber in der Regel keine Möglichkeit selber zu bestimmen, wann ihre Karte gesperrt werden soll. Zahlungsdienstanbieter haben kaum Möglichkeiten, das geografische Gebiet, wo welche Geldkarte verwendet werden darf, individuell für jeden Benutzer oder jede Benutzergruppe flexibel zu ändern.

US-B1-6,212,390 beschreibt ein Verfahren um den Zugriff auf Dienste von Anbietern zu verweigern, wenn der Benutzer sich in einer bestimmten Zelle im Mobilfunknetz befindet.

### Zusammenfassung der Erfindung

Es ist eine Aufgabe der vorliegenden Erfindung, ein neues Verfahren und ein neues System vorzuschlagen, die erlauben, die oben erwähnten Nachteile zu verhindern.

Eine andere Aufgabe ist es, ein neues System und Verfahren vorzuschlagen, mit welchem das geografische Einsatzgebiet von Geldkarten und an Geldkarten gebundene Geldkonten unabhängig von der Akzeptanz der Karten durch Anbieter oder Händler eingeschränkt werden kann.

Eine andere Aufgabe ist es, ein Verfahren und ein System vorzuschlagen, die zusätzliche Dienste und nützliche Funktionen erlauben.

Gemäss der vorliegenden Erfindung werden diese Ziele insbesondere durch die Elemente des kennzeichnenden Teils der unabhängigen Ansprüche erreicht. Weitere vorteilhafte Ausführungsformen gehen ausserdem aus den abhängigen Ansprüchen und der Beschreibung hervor.

Insbesondere werden diese Ziele durch ein Verfahren zur Sperrung beziehungsweise Entsperrung von mindestens einem an ein Identifizierungsmodul gebundenes Geldkonto gemäss dem Oberbegriff des Anspruchs 1 erreicht, in welchem das Geldkonto in Abhängigkeit vom dynamisch ermittelten Standort des Mobilteilnehmers gesperrt beziehungsweise entsperrt wird und in welchem der benannte Mobilteilnehmer aufgefordert wird, ein Passwort einzugeben, wenn ein Geldkonto, das er verwenden will, wegen des Standortes des Mobilteilnehmers gesperrt ist.

Die Ziele werden auch durch ein Sperrmodul mit den Merkmalen des Anspruchs 16 erreicht.

Dies hat den Vorteil, dass Getdkonten in Abhängigkeit von einer dynamisch ermittelten Standort-Information (anstatt vom fixen Händler-terminal-Netz) gesperrt oder entsperrt werden können. Auf diese Weise kann beispielsweise sichergestellt werden, dass ein Geldkonto nur in einem vorbestimmten geografischen Gebiet belastet werden darf - auch dann wenn Anbieter das an dieses Geldkonto gebundene Identifizierungsmodul akzeptieren würden.

In einer bevorzugten Variante können gesperrte oder entsperrte geografische Gebiete von den Geldkontoinhabern beispielsweise über eine Web-Seite festgelegt werden. Dies ermöglicht Ihnen, das geografische Einsatzgebiet ihrer Geldkonten selber an ihre eigenen Bedürfnisse anzupassen.

In einer bevorzugten Variante können gesperrte oder entsperrte geografische Gebieten auch von den Zahlungsdienstanbietern festgelegt werden. Dies erlaubt Zahlungsdienstanbietern Geldkonten anzubieten, die beispielsweise nur in einem eingeschränkten Gebiet - möglicherweise sogar nur in einem einzigen Geschäft, einer Geschäftskette, einer Stadt, einem Unterhaltungspark usw. - einsetzbar sind, wobei diese Grenzen dynamisch zu jeder Zeit geändert werden können.

Mehrere Geldkonten können an ein einziges Identifizierungsmodul gebunden sein. In einer bevorzugten Variante können andere geografische Einsatzgebiete für diese unterschiedlichen Geldkonten festgelegt werden. Dies hat den Vorteil, dass für jedes Geldkonto unterschiedliche Sicherheitskriterien und geografische Einschränkungen festgelegt werden können.

In einer bevorzugten Variante werden mindestens gewisse Geldkonten von einer Plattform in der Infrastruktur des Mobilfunknetzes betrieben. Transaktionsdaten für Transaktionen mit mehreren Geldkonten, die eventuell von mehreren Zahlungsdienstanbietern und/oder mehreren Finanzinstituten angeboten werden, werden somit durch eine gemeinsame Plattform übertragen und in dieser Zahlungsplattform bewertet. Dies hat den Vorteil, dass ein allfälliger Betrug mit grösster Sicherheit aufgedeckt werden kann, da das Verhalten der Benutzer mit mehreren unabhängigen Geldkonten überwacht werden kann, und da dieses Verhalten mit Parametern, die nur in der Infrastruktur des Mobilfunknetzes vorhanden sind, korreliert werden kann. Diese Plattform hat ausserdem den Vorteil, dass konsolidierte Rechnungen und Kontoauszüge, welche Transaktionsdaten mit mehreren Geldkonten umfassen, für den Benutzer und/oder zu statistischen Zwecken verwendet werden können.

In einer bevorzugten Variante können Geldbeträge zwischen verschiedenen Geldkonten eines Benutzers, oder sogar zwischen verschiedenen Benutzern, vorzugsweise über die gemeinsame Plattform übertragen werden. Insbesondere wenn ein Anbieter gleichzeitig ein Mobilteilnehmer ist, können somit Peer-to-Peer Geldtransaktionen über die vom Netzwerkanbieter betriebene Zahlungsplattform durchgeführt werden. Dies erlaubt zum Beispiel, ein Prepaid-Konto bei Überschreitungen der Ausgabenlimite, auf Anforderung oder automatisch wenn vordefinierte Kriterien erfüllt sind, aus einem anderen Geldkonto vom selben oder von einem anderen Benutzer nachzuladen. Dies erlaubt auch, Geldbeträge von Personen zu Personen zu übertragen. Es können somit auch Debit- oder Kreditgrenzen für geschlossene Gruppen von Benutzern definiert werden.

Es können auch proaktive Nachladungsmittel vorgesehen werden, mit welchen Wert- und Debitkonten automatisch nachgeladen werden, wenn gewisse Kriterien erfüllt sind, beispielsweise wenn der Saldo auf einem Konto eine untere Schwelle erreicht.

Die verschiedenen Geldkonten eines Benutzers können von verschiedenen Zahlungsdienstanbietern geführt werden. Jeder Zahlungsdienstanbieter kann seine eigenen Geschäftsbedingungen für die Verwendung seines Dienstes festlegen. Das erfindungsgemässe System und Verfahren weist vorzugsweise Mittel zur Übertragung der Geschäftsbedingungen an den Benutzer auf, womit sichergestellt wird, dass diese Geschäftsbedingungen vom Benutzer gelesen wurden, und zur Sendung einer Bestätigung, dass diese Geschäftsbedingungen akzeptiert wurden.

### Kurze Beschreibung der Figuren

Die vorliegende Erfindung wird mit Hilfe der als Beispiel gegebenen Beschreibung besser verständlich und durch die beiliegenden Figuren veranschaulicht:
Die Figur 1 zeigt ein Blockschema, das den Informationsfluss in einer bevorzugten Ausführungsform des Systems der Erfindung zeigt.
Die Figur 2 zeigt ein Blockschema, das mögliche Datenkanäle zwischen den verschiedenen Akteuren des Systems als Beispiel veranschaulicht.

### Wege zur Ausführung der Erfindung

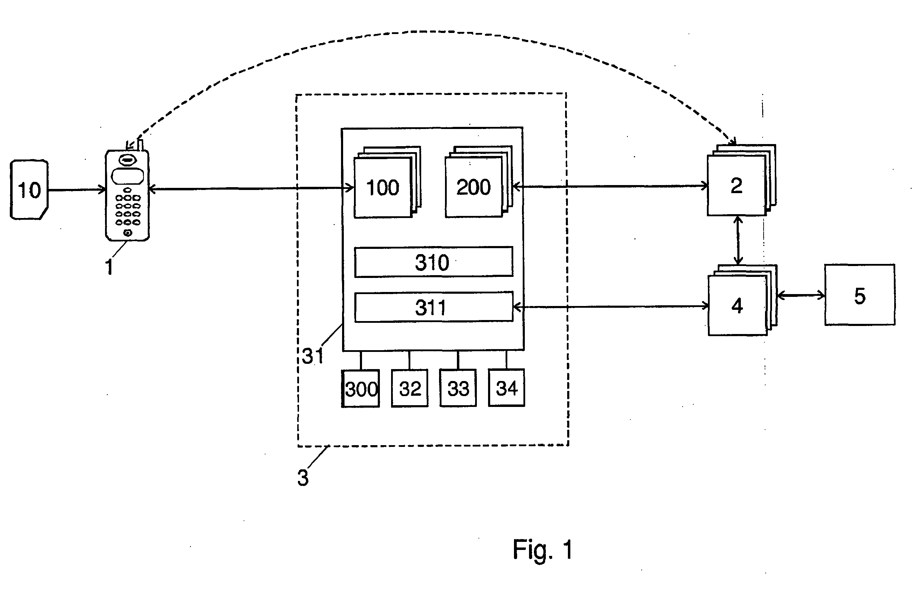

Figur 1 zeigt ein Blockschema mit den Hauptakteuren oder Komponenten des Systems. Im dargestellten Beispiel umfasst das System eine Vielzahl von Benutzern (Mobilteilnehmern), die je über ein Mobilgerät 1 verfügen. Mit "Mobilgerät" werden in diesem Kontext sowohl tragbare Geräte gemeint als auch Geräte, die an einem Fixnetz angeschlossen sind, die aber durch ein Identifizierungsmodul statt durch den Anschlusspunkt an das Netzwerk identifiziert werden.

In der Folge der Beschreibung und in den Ansprüchen wird mit dem Bezugszeichen 1 entweder der Benutzer (Kontoinhaber) oder das Mobilgerät 1 gekennzeichnet, ausser wenn ausdrücklich ein Unterschied gemacht wird. Die Mobilgeräte umfassen ein Identifizierungsmodul 10 zur Identifizierung des Benutzers in einem Mobilfunknetz. Das Identifizierungsmodul 10 ist vorzugsweise persönlich, tragbar, und kann vom Mobilgerät getrennt werden; es ist vorzugsweise eine Chipkarte. Das Mobilgerät 1 kann beispielsweise ein digitales zellulares Mobiltelefon sein (zum Beispiel ein GSM, HSCSD, GPRS, EDGE, CDMA) oder ein UMTS-Mobiltelefon, oder ein Rechner (zum Beispiel ein PDA) oder ein Laptop mit einer kontaktlosen Schnittstelle (zum Beispiel mit einer GSM, HSCSD, GPRS, EDGE, CDMA, UMTS oder WLAN-Erweiterungskarte). Als Variante könnte das Mobilgerät 1 auch ein ad-hoc Gerät sein, das Verbindungen in ein ad-hoc Netzwerk aufbauen kann. Das Identifizierungsmodul 10 ist beispielsweise eine SIM-Karte.

Das Benutzer-Mobilgerät 1 kann an die Infrastruktur 3 eines Mobilnetzwerks angeschlossen werden, um Sprach- und Datenverbindungen mit anderen Geräten aufzubauen. Mit Infrastruktur ist in dieser Beschreibung und in den Ansprüchen jener Teil eines Netzwerkes gemeint, welcher vom Betreiber des Netzwerkes verwaltet und gesteuert wird, einschliesslich die Basis-Stationen, Switches, Heimdateiregister, Verrechnungszentren, Server für zusätzliche Dienste usw. Die Infrastruktur 3 des erfindungsgemässen Systems umfasst eine Zahlungsplattform 31, die später näher beschrieben wird, zusätzliche Module 300, 32, 33, 34 sowie konventionelle Komponenten, die hier nicht beschrieben werden.

Ebenfalls an diese Infrastruktur angeschlossen sind eine Vielzahl von Anbietern 2, die den Benutzern 1 gegen Bezahlung Produkte, Informationen oder Dienstleistungen anbieten. Wie später erläutert, können Benutzer 1 manchmal auch Anbieter sein, während Anbieter 2 auch Produkte oder Dienstleistungen von anderen Anbietern oder Benutzern bestellen und bezahlen können, so dass die formelle Trennung zwischen Benutzern und Anbietern eher theoretisch ist. Anbieter können beispielsweise Händler (einschliesslich online Händler, Händler im Detailverkauf, Ticketverkäufer, Telekom-Mehrwertdienstanbieter und/oder Zahlungsautomaten) sein.

Anbieter verfügen über Anbieterzahlungsmodule, zum Beispiel POS-Terminal (Point-of-Sale) oder Zahlungsapplikationen. In der Folge der Beschreibung und in den Ansprüchen wird mit dem Bezugszeichen 2 entweder der Anbieter oder sein Anbieterterminal gekennzeichnet, ausser wenn ausdrücklich ein Unterschied gemacht wird.

Benutzer 1 und Anbieter 2 verfügen je über ein oder mehrere Geldkonten bei einem oder mehreren Finanzinstituten 5 und auf die über eine Vielzahl von Zahlungsdienstanbietern 4 zugegrififen werden kann. Zahlungsdienstanbieter sind beispielsweise Kreditkarten-Firmen, Debitkartenfirmen, Postämter und anderen Organisationen, die Zahlungskarten herausgeben, einschliesslich der Mobilfunknetzbetreiber. Finanzinstitute sind zum Beispiel Banken, Post und andere Organisation die Geldkonten von Dritten verwalten. Jeder Zahlungsdienstanbieter 4 bietet einen oder mehrere Zahlungsdienste an, welche von Benutzern und Anbietern affiliiert werden können. Jeder Benutzer und jeder Anbieter verfügt bei den Finanzinstituten über ein Geldkonto für jeden affiliierten Zahlungsdienst. Bei einem Kredit- oder Debitkartendienst wird das Geldkonto typischerweise beim Finanzinstitut abgelegt; bei Wertkarten hingegen befindet sich der Geldbetrag in einem Geldkonto in einer Benutzerchipkarte.

Als Sonderfall von Geldkonten, die an ein Identifizierungsmodul 10 gebunden sind, sind Mobilfunknetz Prepaid- und Postpaid-Geldkonten zu erwähnen. Diese Geldkonten werden vor allem zur Bezahlung von Diensten des Mobilfunknetzbetreibers verwendet, unter anderem zur Bezahlung von Sprach- und Datenverbindungen durch das Netz, zum Kauf von zusätzlichen Diensten, einschliesslich das Nachladen von Ringtönen, Bildern, usw.

Zahlungsdienstanbieter 4 verwenden einen Server, um Benutzer für eine Transaktion zu identifizieren beziehungsweise zu authentifizieren, und um Geldtransaktion zu gestatten oder zu sperren. Zahlungsdienstanbieter können ausserdem Schwarzlisten von schlechten Zahlern und unerwünschten Benutzern aufbauen. Clearing-Operationen, Sendung von Rechnungen und Kontoauszügen, Nachladen von Prepaid-Konten und ähnliche Operationen werden auch von individuellen Zahlungsdienstanbietern 4 (beispielsweise mittels angeschlossener Finanzrechner von Finanzinstituten 5) durchgeführt.

Gemäss den bisherigen Zahlungsverfahren bekommt jeder Benutzer eine physische Karte, um seine Affiliation an einen Zahlungsdienst vor einer Geldtransaktion zu beweisen. Jedes Geldkonto wird dann an eine andere Karte gebunden. Will ein Benutzer für seine verschiedenen Zahlungszwecke mehrere Debit-, Kredit-, und/oder Wertkarten affiliieren, muss er mehrere Zahlungskarten mitführen und für jede Zahlungstransaktion die passende auswählen, was sich als unpraktisch und sicherheitsproblematisch erweist.

In einer bevorzugten Ausführungsform werden mehrere Geldkonten, die mehreren Zahlungsdiensten von mehreren Zahlungsdienstanbietern 4 entsprechen können, an ein gemeinsames Identifizierungsmodul 10 gebunden. In einer bevorzugten Variante dient die SIM-Karte, die zur Identifizierung des Benutzers 1 in einem Mobilfunknetz bestimmt ist, als multifunktionelle Zahlungskarte, die an mehrere Geldkonten gebunden ist. Die Affiliation an mehreren Zahlungsdienste wird somit mit dem Besitz einer einzigen Chipkarte bewiesen.

Umgekehrt kann auch ein einzelnes Geldkonto an mehrere Identifizierungsmodule 10 gebunden sein. Dies erlaubt zum Beispiel, dass in einer Familie oder in einem Unternehmen jedes Mitglied über sein eigenes Identifizierungsmodul 10 verfügt, um auf ein gemeinsames Geldkonto zuzugreifen.

Das Identifizierungsmodul 10 enthält einen Speicher von jenen Bereichen, die vom Mobilfunkbetreiber den Zahlungsdienstanbietern zum Ablegen der benötigten Daten zur Verfügung gestellt werden. Jeder Zahlungsdienstanbieter verwendet somit einen vorbestimmten Speicherbereich der SIM-Karten der affiliierten Benutzer, in welchem er Daten (beispielsweise Kartennummer, Geldbeträge, Spendegrenze, Transaktions-Logfiles, temporäre oder permanente dienstabhängige Daten und Programme, usw.) ablegen kann. In einer anderen bevorzugten Variante der Erfindung werden diese Daten (oder ein Teil dieser Daten) in einer Zahlungsplattform 31 in der Infrastruktur des Mobilfunknetzes abgelegt. Die verschiedenen Geldkonten, an welche eine Identifizierungskarte 10 gebunden ist, werden somit in einem virtuellen Wallet 100 in der Plattform 3 zusammengeführt. Ein logischer Link zwischen einer physischen Karte 10 und dem entsprechenden Wallet 100 von Geldkonten affiliierter Zahlungsdiensten kann beispielsweise über die Kartennummer IMSI (International Mobile Subscriber Identity) die MSISDN (Mobile Subscriber ISDN Number) und/oder die ICCID (integrated Circuit Identification) erfolgen.

Mindestens gewisse Geldkonten haben eine feste oder variable Ausgabenlimite. Geldkonten, die an einen Kreditkarten-Zahlungsdienst gebunden sind, haben meistens eine periodische Ausgabenlimite und oft auch eine Ausgabelimite für jede einzelne Zahlungstransaktion. Geldkonten für Debitkarten haben oft auch eine periodische Ausgabenlimite; ausserdem darf der verfügbare Saldo nicht negativ sein oder nicht unter eine vorbestimmte Kreditgrenze gelangen. Bei den meisten Wertkarten entspricht die Ausgabenlimite dem verfügbaren Saldo. Für Module, die an mehrere Geldkonten und/oder mehrere Zahlungsdienste gebunden sind, können ausserdem kollektive Ausgabenlimiten vorgesehen werden. Auf ähnliche Weise können alle Dienste und Geldkonten eines Anbieters 2 in einem Wallet 200 in der Zahlungsplattform 3 zusammengeführt werden, wobei ein logischer Link zwischen einem Anbieter 2 und dem entsprechenden Wallet 200 über eine Anbieter-Identifizierung erfolgen kann.

Das erfindungsgemässe System umfasst ausserdem vorzugsweise ein automatisches Bestimmungsmodul, um das ideale Paar von Geldkonten, welches vom Mobilteilnehmer-Identifizierungsmodul und vom Anbieter-Zahlungsterminal für eine Zahlungstransaktion verwendet wird, automatisch zu bestimmen.

Die Infrastruktur 3 des Mobilfunknetzes umfasst ausserdem vorzugsweise ein Standortbestimmungsmodul 300, um den Standort des Benutzers zu bestimmen. Dieser Standort kann die Zelle des Mobilfunknetzes sein, in welcher sich der Benutzer momentan befindet, oder vorzugsweise mit einer besseren Genauigkeit anhand von Triangulationsverfahren aus Signalen von mehreren Antennen und/oder mit Satelliten-Standortbestimmungsmitteln ermittelt werden. Der ermittelte Standort kann verwendet werden, um Geldkonten in bestimmten Bereichen zu sperren oder zuzulassen, wie später beschrieben.

Ein Cryptoserver 32 ist in der Infrastruktur 3 vorhanden, um Meldungen mit den Benutzern 1, mit den Anbietern 2 und/oder mit den Zahlungsdienstanbietern 4 zu verschlüsseln beziehungsweise zu entschlüsseln. Der Cryptoserver 32 kann auch verwendet werden, um die Authentizität, die Integrität und den Ursprung der Meldung zu prüfen und gegebenenfalls zu bestätigen.

Mit 33 wird ein Betrugsdetektionsmodul veranschaulicht. Dieses Modul verwendet sowohl Parameter, die innerhalb des Mobilfunknetzes bekannt sind (zum Beispiel der Benutzerstandort und der Anbieterstandort) und transaktionsspezifische Parameter (zum Beispiel die Identität der Transaktionspartner oder den Transaktionsbetrag), um verdächtige Transaktionen oder SIM-Karten aufzudecken. In einer nicht dargestellten Variante wird dieses Modul von den Zahlungsdienstanbietern (statt vom. Mobilfunknetzbetreiber) betrieben.

Das Element 34 ist eine Datenbank, in welcher die Geschäftsbedingungen der verschiedenen Zahlungsdienstanbieter abgelegt sind. Mittel sind vorgesehen, um sicherzustellen, dass diese Bedingungen von den Benutzern akzeptiert sind, bevor ein Geldkonto freigeschaltet wird.

Ein proaktives Nachlademodul 311 wird zur automatischen Nachladung der verschiedenen Geldkonten, insbesondere der Wert- und Debitkonten, verwendet, wobei diese Nachladung von verschiedenen Ereignissen initiiert werden kann.

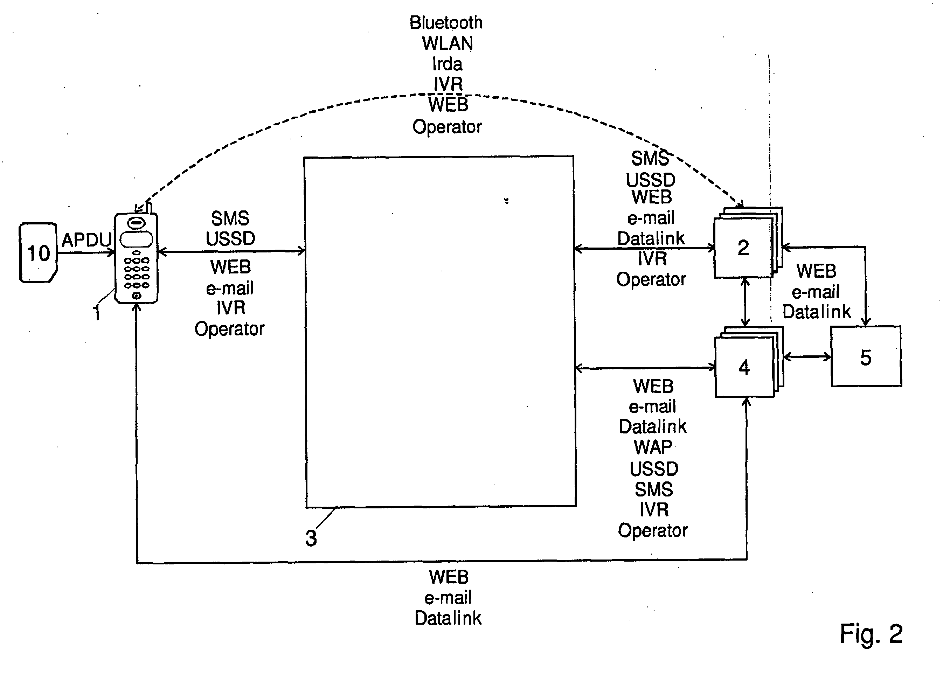

Die Figur 2 zeigt die möglichen Datenkanäle, die für eine Zahlungstransaktion zwischen den verschiedenen Aktoren des Systems verwendet werden können.

Das ldentifizierungsmodul 10 wird typischerweise als ISO-Chipkarte im Mobilgerät 1 untergebracht und kommuniziert über APDU-Befehle mit diesem Mobilgerät. Das Mobilgerät 1 ist beispielsweise ein GSM-Mobilgerät und kann somit über SMS (Short Message System) oder USSD (Unstructured Supplementary Service Data) oder über geroutete Datenpakete, Meldungen mit der Zahlungsplattform 31 austauschen. Als Variante können Daten auch über Internet (zum Beispiel mit einem WEB oder WAP-Browser oder per E-Mail) zwischen dem Mobilgerät 1 und der Zahlungplattform 31 übertragen werden. In einer Variante verfügt die Zahlungsplattform 31 über eine IVR-Schnittstelle (Interactive Voice Response) mit welcher über den Sprachkanal auch Sprachbefehle übertragen werden können. In einer anderen Variante können Daten auch über einen menschlichen Operator (zum Beispiel in einem Call Center) kommuniziert werden. In noch einer anderen Variante werden Daten über eine kontaktlose Schnittstelle (zum Beispiel eine WLAN oder Bluetooth-Schnittstelle) an die Zahlungplattform 31 gesendet.

Auf ähnliche Weise können Anbieter 2 ebenfalls über SMS, USSD, E-Mail, WEB, WAP, über einen IVR und/oder über einen menschlichen Operator, Daten mit der Zahlungsplattform 31 austauschen. Andere Datenverbindungen (zum Beispiel über geroutete Datenpakete oder über einen anderen Datenkanal) können im Rahmen der Erfindung auch vorgesehen werden.

Je nach Zahlungsablauf kann auch eine direkte Verbindung zwischen dem Benutzer 1 und dem Anbieter 2 aufgebaut werden, beispielsweise über Bluetooth, WLAN, WEB (zum Beispiel über eine Transaktionsreferenz), IVR, über einen menschlichen Operator oder über eine infrarote Schnittstelle, oder indem die SIM-Karte oder die gesamte Mobilstation galvanisch mit einem Terminal des Anbieters verbunden wird. Auf diese Weise können zumindest ein Teil der Zahlungsdaten schnell und kostenlos direkt übertragen werden.

Zahlungsdienstanbieter 4 brauchen keine Mobilität und werden somit vorzugsweise über einen festen Datenlink (zum Beispiel über WEB, E-Mail, geroutete Datenpakete, oder über einen anderen Datenlink) mit der Zahlungsplattform 31, mit den Benutzern 1, (wenn nötig) mit den Anbietern 2 und gegebenenfalls mit den Finanzservern der Finanzinstitute 5 verbunden. Die Verbindung zwischen der Zahlungsplattform 31 und den Zahlungsdienstanbietern 4 ist vorzugsweise gesichert (zum Beispiel über ein virtuelles privates Netzwerk). Zahlungsdaten zwischen der Zahlungsplattform 31 und den Zahlungsdienstanbietern 4 können auch in Daten, die mehrere Zahlungstransaktionen betreffen, gesendet werden. Verbindungen mit den Benutzern 1 und mit den Anbietern 2 können auch über Fax oder Post vorgesehen werden.

Wie bereits erwähnt können sowohl Benutzer 1 als auch Anbieter 2 an mehrere Zahlungsdienste mehrerer Zahlungsdienstanbieter 4 affiliiert werden. Dementsprechend können Identifizierungsmodule 10 und Terminals der Anbieter an mehrere Geldkonten 100 beziehungsweise 200 gebunden werden. Will ein Benutzer 1 eine Zahlungstransaktion mit einem Anbieter 2 ausführen, muss vorerst entschieden werden, mit welchem Zahlungsdienst die Transaktion durchgeführt wird. Beispielsweise muss entschieden werden, ob die Transaktion mit einem Kreditkarten-, Debitkarten-oder Wertkarten-Zahlungsdienst durchgeführt wird und mit welchem Anbieter dieses Typs von Diensten.

Diese Entscheidung wird vorzugsweise automatisch vom Bestimmungsmodul 310 getroffen. In der dargestellten bevorzugten Ausführungsform befindet sich dieses Modul in der Zahlungsplattform 31 und wird somit vom Betreiber des Mobilfunknetzes betrieben. Dies hat den Vorteil, dass dieser Betreiber gegenüber den verschiedenen Zahlungsdienstanbietern 4 neutral sein kann und dass kein Anbieter bevorzugt wird. Ausserdem kann das Modul 310 Parameter verwenden, die innerhalb der Infrastruktur 3 des Netzes bestimmt und bekannt sind.

Das Bestimmungsmodul besteht vorzugsweise aus einem Software und/oder Hardware-Modul, beispielsweise aus einer Software-Anwendung, die von einem Server in der Infrastruktur 3 des Mobilfunknetzes ausgeführt wird. Der Server kann über verschiedene Datenkanäle mit den Mobilgeräten 1, mit den Terminals der Anbieter 2 und mit den Zahlungsdienstanbietern 4 kommunizieren.

Die Entscheidung, ein bestimmtes Geldkonto für eine bestimmte Zahlungstransaktion zu verwenden, kann zum Beispiel von folgenden Parametern abhängig sein: Transaktionsbetrag, Bonuspunkte, vorbestimmte Mobilteilnehmerpräferenzen, Sicherheitsfaktoren, Anonymität, Standort des Benutzers, Identität des Mobilfunknetzes, in welchem der Mobilteilnehmer angemeldet ist, Wechselkurs mit den verschiedenen Geldkonten, Gebühren bei der Verwendung der verschiedenen Geldkonten, Zinsen, verfügbarer Saldo, periodische Kredit- oder Debitgrenzen, Zeit, Datum und/oder Wochentag, Logfile früherer Transaktionen, verwendetes Mobilgerät oder Mobilgerättyp, weisse beziehungsweise schwarze oder graue Liste von Anbietern und/oder Mobilteilnehmern, usw.

Andere Parameter und Prioritäten können von den Anbietern 2 und/oder von den Zahlungsdienstanbietern vorgesehen werden.

Aus Datenschutzgründen werden Zahlungstransaktionsdaten vorzugsweise transparent durch das Mobilfunknetz übertragen; der Betreiber der Zahlungsplattform 31 hat in diesem Fall keine Möglichkeit, auf die Zahlungsdaten der unterschiedlichen Benutzer oder Anbieter zuzugreifen. In einer Variante werden mindestens gewisse Zahlungstransaktionsdaten, die für mindestens gewisse Zahlungsdienstanbieter bestimmt sind, vorzugsweise mit Zustimmung der Benutzer oder Anbieter der Zahlungsplattform 31 zugänglich gemacht. Dies hat den Vorteil, dass die Zahlungsplattform 31 mit den Zahlungsdaten verschiedener Benutzer, Anbieter und Zahlungsdienstanbieter zusätzliche Mehrwertdienste anbieten kann, einschliesslich:
■ Sendung von konsolidierten Rechnungen an Benutzer und konsolidierten Gutschriften an Anbieter, in welchen Transaktionen, die über mehrere Zahlungsdienstanbieter durchgeführt wurden, zusammengefasst sind.
■ Bestimmung von konsolidierten Kredit- und/oder Debitgrenzen, um einen maximalen Ausgabebetrag pro Zeitspanne über mehrere Geldkonten festzulegen. Dies erlaubt eine höhere Sicherheit für den Benutzer, für die Anbieter und für die Zahlungsdienstanbieter, da die Gesamtausgaben mit allen Geldkonten eines ldentifizierungsmoduls begrenzt sind.
■ Detektion von Betrügen durch Überwachung des Verhaltens des Benutzers mit mehreren Geldkonten. Dieses Merkmal wird weiter unten ausführlicher beschrieben.
■ Geldtransaktionen zwischen mehreren Geldkonten, die an ein gemeinsames Identifizierungsmodul gebunden sind. Dies erlaubt zum Beispiel, ein Wert- oder Debitkonto aus einem anderen Geldkonto nachzuladen, zum Beispiel automatisch, wenn gewisse Kriterien erfüllt sind.
■ Ermittlung von Statistiken und Berichten über die Verwendung der verschiedenen Geldkonten. Dies erlaubt unter anderem Zahlungsdienstanbietern, Werbekampagnen und Angebote besser an die Bedürfnisse der Benutzer anzupassen.
■ Gleichzeitige Sperrung beziehungsweise Entsperrung aller Geldkonten (die an ein gestohlenes oder verlorenes Identifizierungsmodul gebunden sind) durch den Betreiber oder durch den Benutzer.
■ Bonuspunktesammlungsprogramme über mehrere Geldkonten mehrerer Zahlungsdienstanbieter.
■ Direkte Transaktionen zwischen Geldkonten eines oder mehrerer Benutzer, ohne dass Transaktionsdaten an externe Zahlungsdienstanbieter gesendet werden. Dies erlaubt zum Beispiel, ein Prepaid-Konto eines Benutzers für die Verwendung des Mobilnetzwerkes mit einem anderen Geldkonto eines anderen Benutzers nachzuladen.
■ Verwendung von Benutzerparametern (Namen, Adresse, Solvenz, usw.), die für einen bestimmten Zahlungsdienst eingegeben wurden, für einen anderen, später angegliederten Zahlungsdienst eines anderen Zahlungsdienstanbieters.

In einer bevorzugten Variante werden Zahlungstransaktionsdaten anonymisiert, bevor sie der Zahlungsplattform 31 zugänglich gemacht werden. Zu diesem Zweck wird die Benutzeridentifikation, die mit bestimmten Zahlungstransaktionsdaten verknüpft ist, in einem Anonymizer durch ein für den Netzbetreiber ungenügend kennzeichnendes Alias ersetzt. Auf diese Weise können anonyme Zahlungsdaten in der Zahlungsplattform gesammelt, verwendet und statistisch bewertet werden, ohne Datenschutzgesetze zu verletzen.

Zur Detektion von Betrügen werden vorzugsweise sowohl Parameter des Mobilfunknetzes als auch Parameter des oder der Zahlungsdienstanbieter 4 verwendet. Im dargestellten Beispiel werden Betrüge von einem Betrugsdetektionsmodul 33 (zu Beispiel ein Server mit geeigneten Software-Anwendungen) in der Infrastruktur 3 des Mobilfunknetzes ermittelt. Dieser Modul 33 erhält Parameter des Mobilfunknetzes (das heisst Parameter, die innerhalb des Netzes ermittelt werden) direkt von der Zahlungsplattform 31 und/oder von anderen Hardware- und Software Komponenten der Netzwerkinfrastruktur. Parameter der Zahlungsdienstanbieter werden vorzugsweise über den entsprechenden Datenlink aus den Servern der Zahlungsdienstanbieter 4 herausgeholt. Alternativ können mindestens gewisse Zahlungsdienstanbieter-Parameter aus den durch die Zahlungsplattform 31 übertragenen Zahlungstransaktionsdaten ermittelt werden; in diesem Fall können aus Datenschutzgründen mindestens gewisse Transaktionsdaten anonymisiert sein.

Da die Zahlungsplattform 31 und das Betrugsdetektionsmodul 33 in dieser Variante zentralisiert sind, können Parameter von verschiedenen Zahlungsdienstanbietern 4 kombiniert werden, um dubiose Verhaltensweisen zu ermitteln. Beispielsweise können Zahlungstransaktionsdaten mit einem Kreditkartendienstanbieter und mit einem Debitkartendienstanbieter zusammen gewertet werden, um zu bestimmen, ob das Benutzerverhalten verdächtig ist. Wird ein Betrug oder Betrugsversuch mit einem Zahlungsdienstanbieter aufgedeckt, können alle Geldkonten, die an die betroffene Karte gebunden sind, gleichzeitig gesperrt werden.

Wir werden jetzt das erfindungsgemässe Verfahren zur Sperrung beziehungsweise Entsperrung von Geldkonten in Abhängigkeit vom dynamisch ermittelten Benutzerstandort näher beschreiben. Erfindungsgemäss wird vor oder während jeder Zahlungstransaktion der Standort von einem der Transaktionspartner (beispielsweise vom zahlenden mobilen Geldkontoinhaber) ermittelt und mit einer vorbestimmten Liste von gesperrten oder entsperrten geografischen Gebieten verglichen. Der Geldkontoinhaberstandort wird vorzugsweise mit dem Standortbestimmungsmodul 300 innerhalb der Infrastruktur 3 des Mobilfunknetzes ermittelt, könnte aber auch vom Mobilgerät 1 des Geldkontoinhabers anhand eines Satelliten-Standortbestimmungsmoduls (zum Beispiel eines GPS-Empfängers) ermessen werden. Die Standortermittlung durch das Mobilfunknetz hat jedoch den Vorteil, dass die Geldkarte auch mit konventionellen Mobilgeräten 1 verwendet werden kann, die nicht über einen GPS-Empfänger verfügen, sowie dass die Standortinformation nicht gefälscht werden kann.

Die Liste von gesperrten oder entsperrten geografischen Gebieten wird vorzugsweise in einem nicht dargestellten Speicherbereich in der Zahlungsplattform 31 abgelegt; sie könnte sich aber auch (oder zusätzlich) bei den Zahlungsdienstanbietern 4 und/oder in den Identifizierungsmodulen 10 befinden. Es können somit mehrere Listen von Gebieten in verschiedenen Speicherbereichen definiert werden, die gemäss vorbestimmten Regeln kombiniert werden, um festzulegen, ob ein bestimmtes Geldkonto in einem bestimmten Gebiet verwendet werden darf.

Die Liste von gesperrten oder entsperrten Gebieten kann vorzugsweise von dem Geldkontoinhaber festgelegt. Als Variante, oder zusätzlich, können diese Gebiete auch von den Zahlungsdienstanbietern 4 und/oder vom Betreiber der Zahlungsplattform 31 und/oder von den Anbietern 2 bestimmt werden. Es wäre auch möglich, dass ein angegliederter Mobilteilnehmer - zum Beispiel die Eltern des Geldkontoinhabers - bestimmte geografische Gebiete für ein Geldkonto sperren. In einer bevorzugten Ausführungsform wird die Liste aus einem Fernterminal editiert, beispielsweise über eine Web-Seite, eine WAP-Seite, mit SMS, USSD, E-mail und/oder über ein IVR System (Interactive Voice Response) oder über einen Call Center.

Die Gebiete, die gesperrt oder entsperrt werden sollen, werden vorzugsweise über eine Karte, die auf einer grafischen Oberfläche wiedergegeben wird, eingegeben. In diesem Beispiel umfasst die Karte eine Matrix, in welcher der Benutzer Zellen auswählen kann, die gesperrt oder entsperrt werden sollen. Die Zellen können rechteckig sein oder vorzugsweise geografische Grenzen entsprechen, beispielsweise Gemeinde, Länder oder Staat-Grenzen. Die gesperrten und entsperrten Gebiete werden vorzugsweise visuell wiedergegeben, beispielsweise mit Farben auf einer dargestellten geografischen Karte oder als Tabelle, in welcher die versorgten und nicht versorgten Strecken angegeben sind.

Als Variante gibt der Benutzer eine alphanumerische Liste von Namen, beispielsweise Ortsnamen, Adressen, Postleitzahlen, Ländernamen, Mobilfunknetz-Identitäten, Mobilfunknetz-Zellidentifizierungen, mit welchen die gewünschten Gebiete definiert werden.

Wie bereits erwähnt kann ein einziges Identifizierungsmodul an verschiedenen Geldkonten gebunden sein. In diesem Fall können unterschiedliche geografische Sperrungen beziehungsweise Entsperrungen an die verschiedenen Geldkonten gebunden sein. Dies erlaubt zum Beispiel, mehrere Wertkonten, die in verschiedenen Währungen geführt sind, an ein einziges Identifizierungsmodul 10 zu binden, und jedes Wertkonto ausserhalb des Gebiets, wo die entsprechende Währung angenommen wird, zu sperren. Dies erlaubt auch, ein einziges Identifizierungsmodul an eine Vielzahl von lokal verwendbaren Geldkonten zu binden.

Umgekehrt kann ein einziges Geldkonto an mehreren Identifizierungsmodulen gebunden werden, beispielsweise innerhalb einer Familie oder eines Unternehmens. In diesem Fall können entweder gemeinsame oder Identifizierungsmodul-abhängige Sperrungen festgelegt werden.

In einer bevorzugten Ausführungsform können unterschiedliche Ausgabengrenzen in unterschiedlichen geografischen Gebieten gesetzt werden. Dies erlaubt einem Kontoinhaber, das Risiko mit einem bestimmten Geldkonto in einem Gebiet einzuschränken, oder dieses Geldkonto völlig zu sperren.

Ein Kontoinhaber, der ein bestimmtes Geldkonto in einem gesperrten Gebiet verwenden will, wird erfindungsgemäss von der Zahlungsplattform 31 aufgefordert, ein Passwort oder ein anderes Sicherheitsgeheimnis einzugeben, um das Geldkonto trotzdem verwenden zu dürfen. Die Aufforderung wird beispielsweise über SMS oder USSD gesendet. Dies erlaubt einem Benutzer, die Sperrung eines Geldkontos durch Verzicht an Komfort zu überwinden. Andere Sicherheitsmassnahmen können vom Kontoinhaber oder vom Zahlungsdienstanbieter 4 für unterschiedliche geografische Gebiete gesetzt werden.

Die Information über den Standort des Kontoinhabers kann mit anderen Informationen kombiniert werden, um zu bestimmen, ob ein Geldkonto gesperrt werden soll. In einer bevorzugten Variante kann somit die Zeit als zusätzliches Sperrkriterium verwendet werden. Dies erlaubt zum Beispiel einem Benutzer festzulegen, dass ein bestimmtes Geldkonto während der Benutzerarbeitszeit nur innerhalb oder in der Nähe des Unternehmens verwendet werden darf, während das gleiche Konto am Wochenende nur in der Nähe des Wohnortes entsperrt ist. Geschäfts- und Unternehmenskarten können ausserhalb der Geschäften und Unternehmen und ausserhalb der Öffnungszeiten gesperrt werden. Es ist auch möglich, Geldkonten in bestimmten Gebieten nur für Zahlungstransaktionen mit bestimmten Anbietern zu sperren oder zu entsperren.

Das erfindungsgemässe Verfahren erlaubt es auch, standortabhängige Zahlungstransaktionsgebühren zu erheben. Daher können Zahlungsdienstanbieter 4 Gebühren erheben, die das Risiko berücksichtigen, das mit dem dynamischen ermittelten Benutzerstandort gebunden ist. Beispielsweise können höhere Gebühren für Transaktionen im Ausland oder bei als verdächtig markierten Geschäften verlangt werden.

Wenn ein Geldkontoinhaber in ein gesperrtes Gebiet eintritt, kann als zusätzliche Sicherheitsmassnahmen sein gesperrtes Geldkonto automatisch vom Nachlademodul 311 zugunsten eines sichereren Geldkontos belastet werden.

Das Verfahren das eingesetzt wird, um ein bestimmtes Geldkonto zu sperren, ist vom Typ des Geldkontos abhängig. Wie bereits erwähnt, wird die Entscheidung, ein Geldkonto zu sperren oder zu entsperren, vorzugsweise von einem Softwaremodul in der Zahlungsplattform 31 getroffen, könnte aber auch im Identifizierungsmodul 10 oder von einem Zahlungsdienstanbieter 4 getroffen werden. Diese Entscheidung wird dann vor jeder Transaktion an ein nicht dargestelltes Sperrungsmodul bei dem Zahlungsdienstanbieter 4 und/oder bei dem Geldkontoinhaber in einer Meldung übertragen. Das Sperrungsmodul empfängt diese Meldung und die Transaktion wird in Abhängigkeit von ihrem Inhaltgesperrt oder zugelassen. Der Mobilteilnehmer wird vorzugsweise über SMS, USSD oder E-mail informiert, wenn eine gewünschte Transaktion wegen einer Sperrung gesperrt wurde.

Das erfindungsgemässe Verfahren erlaubt es Geldkonten zu öffnen, die zum Beispiel nur innerhalb von Freiheitspark, Messegelände, Konzertgelände, Restaurantketten, Sportsanlagen, Unternehmengelände, touristischen Orten, usw., verwendet werden können. Dadurch wird die Sicherheit für alle Parteien erheblich erhöht. Eine solche feine Definition der gesperrten und entsperrten Gebieten verlangt jedoch eine dynamische Ermittlung des Mobilfunkteilnehmers, das heisst eine Lokalisierung, die nicht nur auf das angemeldete Mobilfunknetz basiert.

Das erfindungsgemässe Verfahren bzw. System kann unter anderem verwendet werden, um Geldtransaktionen von Benutzer zu Benutzer (P-to-P) durchzuführen.

### Bezugszeichenliste

- 1: Mobilgerät, Benutzer
- 10: Identifikationsmodul
- 100: Wallet, Geldkonto
- 2: Anbieter, Anbieterterminal
- 200: Wallet, Geldkonto
- 3: Infrastruktur
- 300: Standortbestimmungsmodul
- 310: Bestimmungsmodul
- 311: Nachlademodul
- 31: Zahlungsplattform
- 32: Cryptoserver
- 33: Betrugsdetektionsmodul
- 34: Datenbank
- 4: Zahlungsanbieter
- 5: Finanzinstitut

## Patentansprüche

1. Verfahren zur Sperrung beziehungsweise Entsperrung von mindestens einem an ein Identifizierungsmodul (10) gebundenes Geldkonto,
wobei das benannte Identifizierungsmodul (10) zur Identifizierung eines Mobilgeräts (1) eines Mobiltelinehmers in einem Mobilfunknetz bestimmt ist,
wobei das benannte Geldkonto zur Zahlung von Leistungen von mindestens einem Anbieter (2) bestimmt ist,
**dadurch gekennzeichnet, dass** das benannte Geldkonto in Abhängigkeit vom dynamisch ermittelten Standort des Mobilgeräts gesperrt beziehungsweise entsperrt wird und in welchem der benannte Mobilteilnehmer nur aufgefordert wird, ein Passwort einzugeben, wenn ein Geldkonto, das er verwenden will, wegen des Standortes des Mobilteilnehmers gesperrt ist, während ein entsperrtes Gebiet keine Passworteingabe verlangt.

2. Verfahren gemäss Anspruch 1, in welchem der benannte Standort vom Mobilfunknetz ermittelt wird.

3. Verfahren gemäss Anspruch 1, in welchem der benannte Standort vom Mobilgerät (1) ermittelt wird.

4. Verfahren gemäss einem der Ansprüche 1 bis 3, in welchem eine Vielzahl Geldkonten an das benannte Identifizierungsmodul (10) gebunden sind und in welchem unterschiedliche geografische Sperrungen beziehungsweise Entsperrungen an die benannten Geldkonten gebunden sind.

5. Verfahren gemäss einem der Ansprüche 1 bis 4, in welchem eine Menge von gesperrten geografischen Gebieten in einem elektronischen Speicher abgelegt ist.

6. Verfahren gemäss einem der Ansprüche 1 bis 5, in welchem eine Menge Set von entsperrten geografischen Gebieten in einem elektronischen Speicher abgelegt ist.

7. Verfahren gemäss einem der Ansprüche 1 bis 6, in welchem unterschiedliche Ausgabengrenzen in unterschiedlichen geografischen Gebieten gesetzt sind.

8. Verfahren gemäss einem der Ansprüche 1 bis 7, in welchem das benannte Geldkonto in Abhängigkeit des Standortes kombiniert mit der Zeit gesperrt beziehungsweise entsperrt wird.

9. Verfahren gemäss einem der Ansprüche 1 bis 8, in welchem das Gebiet, in welchem das benannte Geldkonto gesperrt beziehungsweise entsperrt ist, vom benannten Mobilteilnehmer (1) festgelegt wird.

10. Verfahren gemäss einem der Ansprüche 1 bis 9, in welchem das Gebiet, in welchen das benannte Geldkonto gesperrt beziehungsweise entsperrt ist, vom Zahlungsdienstanbieter (4) festgelegt wird.

11. Verfahren gemäss einem der Ansprüche 1 bis 9, in welchem das Gebiet, in welchen das benannte Geldkonto gesperrt beziehungsweise entsperrt ist, vom Anbieter (2) festgelegt wird.

12. Verfahren gemäss einem der Ansprüche 1 bis 9, in welchem das Gebiet, in welchen das benannte Geldkonto gesperrt beziehungsweise entsperrt ist, vom Betreiber der Zahlungsplattform (31) festgelegt wird.

13. Verfahren gemäss einem der Ansprüche 1 bis 12, in welchem das Gebiet, in welchem das benannte Geldkonto gesperrt beziehungsweise entsperrt ist, über eine Web-Seite editiert wird.

14. Verfahren gemäss einem der Ansprüche 1 bis 13, in welchem standortabhängige Zahlungstransaktionsgebühren erhoben werden.

15. Verfahren gemäss einem der Ansprüche 1 bis 14, in welchem das benannte Geldkonto in Abhängigkeit vom mit dem benannten Identifizierungsmodul verwendeten Mobilgerät gesperrt beziehungsweise entsperrt wird.

16. Sperrungsmodul zur Sperrung beziehungsweise Entsperrung von Zahlungstransaktionen, das mit einem Standortbestimmungsmodul zusammenarbeitet, um den Standort von Mobilgeräten (1) eines Mobitteilnehmers zu ermitteln, **dadurch gekennzeichnet, dass** es die benannte Zahlungstransaktion in Abhängigkeit vom dynamisch ermittelten Standort des Mobifgeräts sperrt beziehungsweise entsperrt und in welchem ein Geldkonto, wenn es wegen des Standortes des Mobilteilnehmers gesperrt ist, durch die Eingabe eines Passwortes durch den Mobilteilnehmer entsperrbar ist, während ein entsperrtes Gebiet keine Passworteingabe verlangt.

## Revendications

1. Procédé pour le blocage respectivement le déblocage d'au moins un compte monétaire lié à un module d'identification (10),
ledit module d'identification (10) étant destiné à l'identification d'un appareil mobile (1) d'un abonné mobile dans un réseau radiomobile,
ledit compte monétaire étant destiné au paiement de prestations d'au moins un fournisseur (2),
**caractérisé en ce que** ledit compte monétaire est bloqué respectivement débloqué en fonction de l'emplacement de l'abonné mobile déterminé dynamiquement et dans lequel ledit abonné mobile n'est invité à introduire un mot de passe que lorsqu'un compte monétaire qu'il veut utiliser est bloqué à cause de l'emplacement de l'abonné mobile, tandis qu'un territoire débloqué n'exige pas d'introduction de mot de passe.

2. Procédé selon la revendication 1, dans lequel ledit emplacement est déterminé par le réseau radiomobile.

3. Procédé selon la revendication 1, dans lequel ledit emplacement est déterminé par l'appareil mobile (1).

4. Procédé selon l'une des revendications 1 à 3, dans lequel une pluralité de comptes monétaires sont liés audit module d'identification (10) et dans lequel différents blocages respectivement déblocages géographiques sont liés auxdits comptes monétaires.

5. Procédé selon l'une des revendications 1 à 4, dans lequel une quantité de territoires géographiques bloqués sont stockés dans une mémoire électronique.

6. Procédé selon l'une des revendications 1 à 5, dans lequel une quantité de groupes de territoires géographiques bloqués sont stockés dans une mémoire électronique.

7. Procédé selon l'une des revendications 1 à 6, dans lequel différentes limites de dépenses sont fixées dans différents territoires géographiques.

8. Procédé selon l'une des revendications 1 à 7, dans lequel ledit compte monétaire est bloqué respectivement débloqué en fonction de l'emplacement combiné avec l'heure.

9. Procédé selon l'une des revendications 1 à 8, dans lequel le territoire dans lequel ledit compte monétaire est bloqué respectivement débloqué est fixé par ledit abonné mobile (1).

10. Procédé selon l'une des revendications 1 à 9, dans lequel le territoire dans lequel ledit compte monétaire est bloqué respectivement débloqué est fixé par le fournisseur de services de paiement (4).

11. Procédé selon l'une des revendications 1 à 9, dans lequel le territoire dans lequel ledit compte monétaire est bloqué respectivement débloqué est fixé par le fournisseur (2).

12. Procédé selon l'une des revendications 1 à 9, dans lequel le territoire dans lequel ledit compte monétaire est bloqué respectivement débloqué est fixé par l'exploitant de la plate-forme de paiement (31).

13. Procédé selon l'une des revendications 1 à 12, dans lequel le territoire dans lequel ledit compte monétaire est bloqué respectivement débloqué est édité à travers une page web.

14. Procédé selon l'une des revendications 1 à 13, dans lequel des taxes de transaction de paiement dépendant de l'emplacement sont prélevées.

15. Procédé selon l'une des revendications 1 à 14, dans lequel ledit compte monétaire est bloqué respectivement débloqué en fonction de l'appareil mobile utilisé avec ledit module d'identification.

16. Module de blocage pour le blocage respectivement le déblocage de transactions de paiement, qui collabore avec un module de localisation pour déterminer l'emplacement d'appareils mobiles (1) d'un abonné mobile, **caractérisé en ce qu'**il bloque respectivement débloque ladite transaction de paiement en fonction de l'emplacement de l'appareil mobile déterminé dynamiquement et dans lequel un compte monétaire peut être débloqué par l'introduction d'un mot de passe par l'abonné mobile lorsqu'il est bloqué à cause de l'emplacement de l'abonné mobile, tandis qu'un territoire débloqué n'exige pas d'introduction de mot de passe.

## Claims

1. Method for blocking respectively unblocking at least one money account bound to an identification module (10),
said identification module (10) being designed for identifying a mobile device (1) of a mobile user in a mobile radio network (3),
said money account being designed for paying services of at least one supplier (2),
**characterized in that** said money account is blocked respectively unblocked depending on the dynamically determined location of the mobile device and wherein said mobile user is only invited to enter a password if a money account that he wishes to use is blocked because of the location of the mobile user whilst an unblocked area does not require a password to be entered.

2. Method according to claim 1, wherein said location is determined by the mobile radio network.

3. Method according to claim 1, wherein said location is determined by the mobile device (1).

4. Method according to one of the claims 1 to 3, wherein a plurality of money accounts are bound to said identification module (10) and wherein different geographic blockings respectively unblockings are bound to said money accounts.

5. Method according to one of the claims 1 to 4, wherein a quantity of blocked geographical areas is stored in an electronic memory.

6. Method according to one of the claims 1 to 5, wherein a quantity of unblocked geographical areas is stored in an electronic memory.

7. Method according to one of the claims 1 to 6, wherein different spending limits can be set in different geographical areas.

8. Method according to one of the claims 1 to 7, wherein said money account is blocked respectively unblocked depending on the location combined with the time.

9. Method according to one of the claims 1 to 8, wherein the area in which said money account is blocked respectively unblocked is set by said mobile user (1).

10. Method according to one of the claims 1 to 9, wherein the area in which said money account is blocked respectively unblocked is set by the payment service provider (4).

11. Method according to one of the claims 1 to 9, wherein the area in which said money account is blocked respectively unblocked is set by the supplier (2).

12. Method according to one of the claims 1 to 9, wherein the area in which said money account is blocked respectively unblocked is set by the operator of the payment platform (31).

13. Method according to one of the claims 1 to 12, wherein the area in which said money account is blocked respectively unblocked is edited over a website.

14. Method according to one of the claims 1 to 13, wherein location-dependent payment transaction fees are charged.

15. Method according to one of the claims 1 to 14, wherein said money account is blocked respectively unblocked depending on the mobile device used with said identification module.

16. Blocking module for blocking respectively unblocking payment transactions, working with a location-determining module to determine the location of mobile devices (1) of a mobile user, **characterized in that** it blocks respectively unblocks said payment transaction depending on the dynamically determined location of the mobile device and wherein a money account, if it is blocked because of the mobile user's location, can be unblocked by the mobile user entering a password, whilst an unblocked area does not require a password to be entered.
